# EUROPÄISCHE PATENTSCHRIFT

(11) **EP 0 626 191 B1**
(45) Veröffentlichungstag und Bekanntmachung des Hinweises auf die Patenterteilung: **03.07.2002**
(21) Anmeldenummer: 94104058.6
(22) Anmeldetag: 16.03.1994
(51) Int. Cl.: B01D 53/26

(54) **Verfahren und Vorrichtung zum Ausgleich von Feuchtigkeitsschwankungen eines strömenden Gases**
Process and apparatus for the compensation of moisture fluctuations of a gas stream
Procédé et dispositif pour la compensation de fluctuations d'humidité dans un courant gazeux

(30) Priorität: 27.05.1993 DE 4317641
(43) Veröffentlichungstag der Anmeldung: 30.11.1994
(73) Patentinhaber: SOMOS GmbH, D-64331 Weiterstadt (DE)
(72) Erfinder: Becker, Achim, D-64291 Darmstadt (DE)
(74) Vertreter: Voth, Gerhard, Dipl.-Ing.

(56) Entgegenhaltungen:
- EP-A- 0 128 580
- EP-A- 0 143 946
- WO-A-90/13351
- US-A- 4 248 607

## Beschreibung

Die Erfindung betrifft ein Verfahren nach den Merkmalen des Anspruchs 1.

An ein trockenes Gas wird oft die Anforderung gestellt, daß seine Taupunkttemperatur einen vorgegebenen Grenzwert nicht überschreiten darf. Bei der Aufbereitung eines Prozeßgases durch Feuchteentzug zu einem Trockengas kann es je nach dem dabei angewandten Verfahren dazu kommen, daß dieser Grenzwert kurzzeitig überschritten wird. So ist beispielsweise aus der deutschen Offenlegungsschrift 23 54 745 ein Verfahren zum Trocknen von Kunststoffgranulat in einem Trocknungstrichter mittels Trockenluft bekannt, bei dem aus dem Trocknungstrichter austretende Abluft in einem Adsorptionsmittel enthaltenden Trockner getrocknet und dem Kunststoffgranulat als Trockenluft wieder zugeführt wird. Bei Sättigung des Adsorptionsmittels mit der aufgenommenen Feuchte wird das Adsorptionsmittel mittels Heißluft regeneriert. Während der auf die Regeneration folgenden Adsorption entsteht in der vom Trockner gelieferten Trockenluft jeweils bei Zuschaltung eines frisch regenerierten, noch heißen Trockentopfes ein kurzer Anstieg der Taupunkttemperatur, der zwar nur einige Minuten anhält, jedoch bis zu 30° oder 40° Kelvin über die vorgegebene, höchstzulässige Grenze der Taupunkttemperatur hinaus reicht. Ist der zugeschaltete Trockentopf hinreichend abgekühlt, sinkt die Taupunkttemperatur entsprechend auf den gewünschten Taupunkt oder darunter. Damit verläßt den Trockner im Ergebnis ein Trockenluftstrom mit schwankendem Feuchtegehalt. Dies ist für Verbraucher mit erhöhter Feuchteempfindlichkeit wie zum Beispiel Trocknungstrichter für Kunststoffgranulat nur einsetzbar, wenn die Überschreitung der vorgegebenen Taupunktgrenztemperatur hinreichend kurzzeitig ist.

Aus der US-A-4248607 ist eine Trocknungseinrichtung mit zwei Molekularsiebtrockner bekannt. Ein erstes Molekularsieb ist für die Haupttrocknung des Gases vorgesehen. Es ist ein zweites Zusatzmolekularsieb in dieser Anordnung beschrieben, welches eine weitere Trocknung der Luft nach dem Abkühlen über eine Kühleinrichtung durchführt. Beide Trockner müssen aktiv regeneriert werden. Es ist weiterhin insbesondere bei medizinisch/technischen Einrichtungen bekannt Trockenmittelbehälter als Sicherheitsadsorber vor einem Endverbraucher, zum Beispiel medizinische Apparate wie Gasanschlüsse in Krankenhäuser, vorzusehen. Diese Sicherheitsadsorber sind jedoch lediglich in der Lage bei einem Störfall Feuchtigkeit aufzunehmen und müssen nach einem solchen Störfall ausgetauscht werden.

Der Erfindung liegt die Aufgabe zugrunde, ein strömendes Gas mit schwankendem Feuchtigkeitsgehalt derart aufzubereiten, daß eine vorgebene Taupunkttemperatur zu keiner Zeit überschritten wird.

Bei dem eingangs genannten Verfahren gelingt dies dadurch, daß das Gas durch ein regenerierbar feuchteadsorbierendes Mittel geführt wird, dessen Adsorptionskapazität größer ist als der mittlere Feuchtegehalt des Gases. Das das Mittel verlassende Gas zeigt einen insgesamt nahezu konstanten Feuchtegehalt, der durch Wahl der Menge des vom Gas durchströmten Mittels im Verhältnis zum stündlichen Gasdurchsatz so gewählt werden kann, daß die zugehörige Taupunkttemperatur unterhalb des vorgegebenen Grenzwertes bleibt. Dabei nimmt das Mittel aus den Gasanteilen mit erhöhter Feuchte den überschüssigen Wassergehalt durch Adsorption weg und entläßt die adsorbierte Feuchte an diejenigen Abschnitte des strömenden Gases, deren Feuchte geringer ist als der Mittelwert des Feuchtegehalts des zugeführten Gases.

Daher ist eine Regeneration des Mittels in der Kammer durch separate Maßnahmen entbehrlich. Für das Mittel kommt bevorzugt ein Molekularsieb in Betracht. Ferner empfiehlt es sich, das Gas mit einer konstanten

Temperatur von etwa 20°C bis 120°C durch das Mittel zu leiten. Wenn das zugeführte Gas im Mittel eine Feuchte von beispielsweise 5 g/m³ besitzt, genügt es, wenn pro m³ stündlichem Gasdurchsatz etwa 100g eingesetzt werden. Mit besonderem Vorteil wird, bezogen auf den mittleren Feuchtegehalt des Gases, die 10- bis 20-fache Menge an Molekularsieb eingesetzt.

Zur Durchführung des erfindungsgemäßen Verfahrens kann eine Vorrichtung dienen, bei der eine Quelle strömenden Gases mit schwankendem Feuchtegehalt mit einem Gasverbraucher verbunden ist, und bei der in die Verbindung von Quelle und Verbraucher eine mit einem Mittel gefüllte Kammer eingeschaltet ist, welches regenierbar Feuchte adsorbiert und eine Feuchteadsorptionskapazität hat, die größer ist als der mittlere Feuchtegehalt des Gases. Zweckmäßig ist die Kammer mit einem Molekularsieb vollständig gefüllt. Mit besonderem Vorteil kommt als Quelle ein Trockner in Betracht, der im einzelnen in der deutschen Offenlegungsschrift 36 25 013 beschrieben ist, wobei die Kammer zwischen den Trockenluftauslaß des Trockners und eine Heizeinrichtung für das aus der Kammer entlassene Gas geschaltet ist.

Bei Trocknern, die nur einen einzigen Trockentopf enthalten, ist in bevorzugter Ausgestaltung der Erfindung zur Kammer eine Bypass-Leitung mit gesteuerten Klappenventilen vorgesehen, so daß das zur Regenerierung des Adsorptionsmittels im Trockentopf erforderliche Regenerationsmedium um die Kammer herum geführt werden kann. Alternativ kann der Trockenluftanschluß des Trockentopfes mit einer separaten Ansaugleitung über ein Klappenventil verbunden sein, über welche das Regenerationsmedium während der Regenerationsphase des im Trockentopf enthaltenen Adsorptionsmittels angesaugt und mittels einer zweckmäßig im Trockentopf vorgesehenen Heizeinrichtung auf die gewünschte Regenerationstemperatur gebracht werden kann.

Bevorzugte Ausgestaltungen der Erfindung sind in den Unteransprüchen angegeben.

Ein Ausführungsbeispiel der Erfindung wird nachstehend anhand der beigefügten Zeichnung im einzelnen beschrieben. Es zeigen:
- Fig. 1: eine schematische Darstellung eines Trockenlufttrockners mit Trocknungstrichter;
- Fig. 2: eine schematische Darstellung einer alternativen Ausführungsform zu der Vorrichtung nach Fig. 1; und
- Fig. 3: ein Diagramm zur Erläuterung der Arbeitsweise der Vorrichtungen nach Fig. 1 und 2.

In einem Trocknungstrichter 1 befindet sich eine Füllung 2 von Kunststoffgranulat, welches über eine nichtdargestellte obere Einfüllöffnung des Trocknungstrichters 1 kontinuierlich oder abschnittweise in den Trocknungstrichter eingefüllt, in demselben getrocknet und nach der Trocknung aus der unteren Abgabeöffnung 3 aus dem Trocknungstrichter ausgegeben und beispielsweise einer nicht dargestellten Vorrichtung zur Herstellung von Kunststoffartikeln zugeführt wird. Zur Trocknung der Füllung 2 ist in den Trocknungstrichter 1 eine Trockenluftzuführleitung 5 hineingeführt, welche in der Nähe der Ausgabeöffnung 3 mit einem Verteiler 6 im Trocknungstrichter 1 endet. Die durch die Leitung 5 in den Trocknungstrichter 1 eingeleitete und durch eine Heizeinrichtung 7 auf die erforderliche Temperatur von 80° C oder höher gebrachte Trockenluft durchströmt die Füllung 2 im Trocknungstrichter 1 gemäß den eingezeichneten Pfeilen von unten nach oben und verläßt letzteren durch eine vom Deckel des Trocknungstrichters 1 ausgehende Abluftleitung 8.

Die mit Feuchte beladene Abluft aus dem Trocknungstrichter 1 wird über die Abluftleitung 8 einem im Ganzen mit 10 bezeichneten Trockenlufttrockner 10 zugeführt, in welchem der Abluft die mitgeführte Feuchte entzogen wird. Die Abluft aus der Leitung 8 gelangt daher in dem Trockenlufttrockner 10 über ein erstes Feststoffilter 12 und ein Klappenventil 14 zur Ansaugleitung 16 eines Gebläses 18, dessen Druckleitung 20 in einen äußeren Ringraum 22 eines Trockentopfes 24 mündet. Die feuchte Abluft durchströmt radial ein in dem Trockentopf 24 enthaltenes Adsorptionsmittel 26 in Form vom Silikagel und/oder Molekularsieb, welches der Abluft die Feuchte entzieht. Die aus dem Adsorptionsmittel 26 in einen Zentralkanal 28 des Trockentopfes 24 einströmende getrocknete Luft gelangt über ein Klappenventil 29 in eine Ausgangsleitung 30 des Trockenlufttrockners 10, der bei dem hier beschriebenen Ausführungsbeispiel als Quelle des strömenden Gases mit schwankendem Feuchtegehalt anzusehen ist. Die Ausgangsleitung 30 mündet in eine Kammer 32, die mit Adsorptionsmittel, beispielsweise Molekularsieb, vollständig gefüllt ist. Von der Kammer 32 führt eine Leitung 34 über die Heizeinrichtung 7 zu der Trockenluftleitung 5.

Der Zentralkanal 28 weist außerhalb des Trockentopfes 24 eine Abzweigleitung 40 auf, in die ein weiteres Klappenventil 42 sowie ein Feststoffilter 44 geschaltet sind und die jenseits des Feststoffilters 44 in die Außenluft mündet. Im Zentralkanal 28 sitzt mittig eine Heizung 46. Schließlich besitzt die Ansaugleitung 16 eine mit einem Klappenventil 48 versehene Abzweigleitung 50, die über das Klappenventil 48 in die Außenluft mündet.

Während der Adsorptionsphase des Trockenlufttrockners 10 sind die Klappenventile 42 und 48 geschlossen, während die Klappenventile 14 und 29 geöffnet sind, so daß der Luftkreislauf über die Leitungen 8, 16, 20, 22, 28, 30, 34 und 5 gewährleistet ist.

Wenn das Adsorptionsmittel 26 mit Feuchtigkeit gesättigt ist, stellt eine nicht dargestellte Steuerung sämtliche Klappenventile sowie die Drehrichtung des Ventilators 18 um, so daß in dem dann einsetzenden Regenerationszyklus Außenluft über das Filter 44 und das Klappenventil 42 angesaugt und von der dann eingeschalteten Heizung 46 erhitzt wird. Die heiße Regenerationsluft durchströmt entsprechend den gestrichelt dargestellten Pfeilen das Adsorptionsmittel 26 von radial innen nach außen und wird vom Gebläse 18 über Leitungen 20, 16 und 50 sowie das geöffnete Klappenventil 48 nach außen entlassen. Nach beendeter Regeneration des Adsorptionsmittels 26 werden die Klappenventile sowie die Drehrichtung des Gebläses 18 erneut umgestellt und die Heizung 46 abgeschaltet.

Die in unmittelbarem Anschluß an die Regenerationsphase dann in dem noch heißen Adsorptionsmittel getrocknete Luft besitzt einen Taupunkt, der wesentlich über dem erwünschten Grenzwert von beispielsweise -30°C liegt. Mit Abkühlung des Adsorptionsmittels 26 sinkt der Taupunkt der vom Trockenlufttrockner 10 über Leitung 30 abgegebenen Trockenluft dann allmählich auf eine Temperatur, die wesentlich unterhalb des erwünschten Taupunktes liegt.

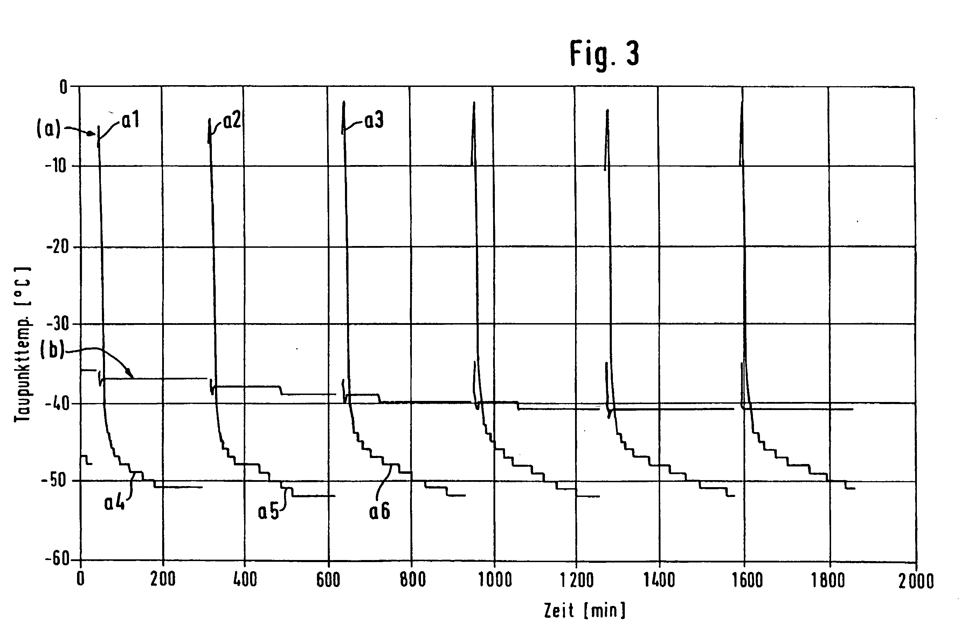

Fig. 3 zeigt eine Messung der Taupunkttemperatur der die Leitung 30 durchströmenden Luft über einen Zeitraum von 2000 min. Die auf die jeweilige Regenerationsphase für das Adsorptionsmittel 26 entfallende Zeitspanne von jeweils etwa 15 Minuten ist aus der Darstellung ausgeblendet. Die Kurve (a) zeigt mehrere Spitzen a1, a2, a3, bei denen die Taupunkttemperatur auf einen Bereich zwischen 0°C und -10°C ansteigt. Zwischen den Spitzen a1, a2 und a3 liegen Kurvenabschnitte a4, a5 und a6, bei denen die Taupunkttemperatur unterhalb -40°C liegt und bis auf eine Taupunkttemperatur von unterhalb -50°C absinkt. Die Spitzen a1, a2 und a3 entsprechen zeitgleich der Umschaltung des Adsorptionsmittels 26 von Regeneration auf Adsorption, während die Kurvenbereiche a4, a5 und a6 den zeitlichen Abschnitten aus dem Adsorptionszyklus mit abgekühltem Adsorptionsmittel 26 entsprechen.

Der durch den Kurvenverlauf (a) dargestellte periodisch schwankende Feuchtegehalt der die Leitung 30 entströmenden Trockenluft wird in der Kammer 32 durch das dortige Adsorptionsmittel stabilisiert. Die Messung der Taupunkttemperatur der die Kammer 32 über Leitung 34 entströmenden Luft ergab die Kurve (b) gemäß Fig. 3, gemäß welcher die Taupunkttemperatur durchgängig unterhalb -30°C liegt und über mehrere aufeinanderfolgende Adsorptionszyklen hinweg allmählich auf knapp unter -40°C sinkt. Daher besitzt die Luft in der Leitung 34 hinter der Kammer 32 einen Taupunkt der durchgängig weit unterhalb -30°C liegt. Die Temperatur der Luft in den Leitungen 30 und 34 liegt bei etwa 60°C. Bemerkenswerterweise bedarf das in der Kammer 32 enthaltene Molekularsieb keinerlei Einflußnahme von außen, insbesondere bedarf es keiner Regeneration. Die kurzzeitigen Feuchtespitzen a1, a2, a3 reichen nicht aus, das Molekularsieb mit Feuchte zu sättigen, so daß die den Kurvenspitzen a1, a2, a3 entsprechende Feuchte von dem Molekularsieb vollständig aufgenommen werden kann. Diese Feuchte wird während des weiteren Verlaufs des jeweiligen Adsorptionszyklus an der dann trockeneren Trockenluft entsprechend den Kurvenabschnitten a4, a5, a6 mitgegeben, so daß die Luft hinter der Kammer 32 einen gleichmäßigen Feuchtegehalt entsprechende Kurve (b) besitzt. Die Schwankungen des Feuchtegehalts der Luft in Leitung 30 werden daher von dem in der Kammer 32 enthaltenen Adsorptionsmittel nahezu vollständig ausgeglichen.

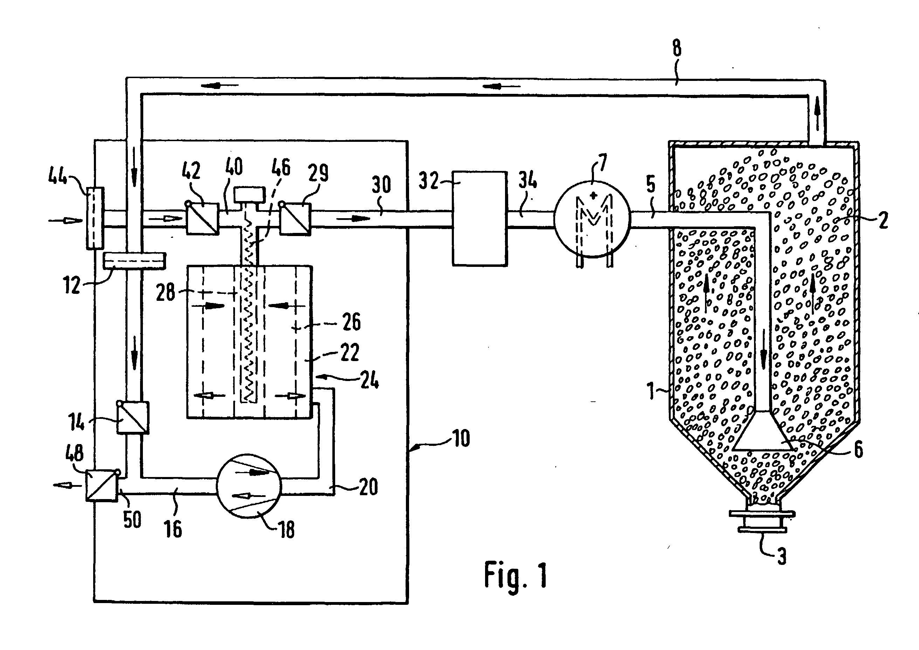

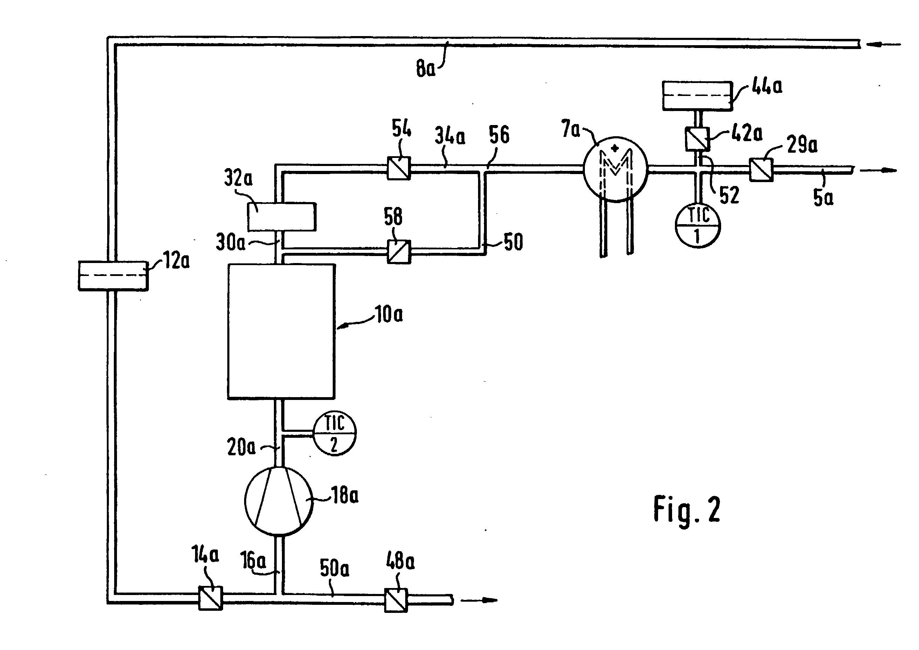

Eine apparative Variante der Vorrichtung nach Fig. 1 zeigt Fig. 2, bei der die den im Zusammenhang mit Fig. 1 erläuterten Bauteilen entsprechende Bauteile mit gleicher Bezugszahl und dem Affix a bezeichnet sind. Zur Vereinfachung ist der Luftverbraucher bei der schematischen Darstellung nach Fig. 2 weggelassen. Die von dem Trocknungstrichter ausgehende Abluft wird von dem Gebläse 18a über Abluftleitung 8a, Filter 12a und Klappenventil 14a und Leitung 16a angesaugt und über , Leitung 20a durch den Trockentopf 10a gedrückt, welchen sie als Trockenluft über Leitung 30a und Kammer 32a verläßt, über Leitung 34a der Heizung 7a zugeführt und von dieser hinreichend aufgewärmt über Klappenventil 29a und Zuluftleitung 5a wieder dem Trockentrichter zugeführt wird.

Während insoweit dieser Luftkreislauf während des Adsorptionszyklus dem bei der Vorrichtung bei Fig. 1 beschrieben gleicht, ändert sich die Luftführung während des Regenerationszyklus: nach Umsteuerung des Gebläses 18a saugt dieses über den Filter 44a und Klappenventil 42a sowie eine in die Leitung 5a mündende Zweigleitung 52a Außenluft an, die bei geschlossenem Klappenventil 29a durch die dann eingeschaltete Heizung 7a geführt und dort auf die erforderliche Regenerationstemperatur gebracht wird. Die heiße Regenerationsluft strömt jetzt über eine Bypassleitung 50 an der Kammer 32a vorbei in die Leitung 30a, wobei ein Klappenventil 54, welches zwischen der Abzweigstelle 56 des Bypasses 50 und der Kammer 32a angeordnet ist, geschlossen und ein in der Bypassleitung 50 angeordnetes Ventil 58 offen sind. Die heiße Regenerationsluft durchströmt den Trockentopf 24a und verläßt den Trockenlufttrockner 10a über eine Zweigleitung 50a von der Leitung 16a und ein geöffnetes Klappenventil 48a, wobei das Klappenventil 14a geschlossen ist. Während des Adsorptionszyklus sind die Ventile 54, 29a offen, während die Ventile 42a und 58 geschlossen sind.

## Patentansprüche

1. Verfahren zur Auslegung einer Vorrichtung zum Ausgleich von Feuchtigkeitsschwankungen eines aus einer Quelle strömenden Gases welches einen etwa periodisch schwankenden Feuchtegehalt aufweist und ein Gasverbraucher vorgesehen ist, der mit der Quelle verbunden ist, wobei das Gas in der Verbindung von Quelle und Verbraucher durch eine feuchteadsorbierendes Mittel enthaltene Kammer (32) geführt wird dessen Adsorptionskapazität größer ist, als der mittlere Feuchtegehalt des Gases, wobei bezogen auf diesen Feuchtegehalt des Gases pro m3 stündlichen Gasdurchsatz in der Kammer (32) die 10- bis 20fache Menge an regenerierbarem feuchteadsorbierendem Mittel eingesetzt wird und das Mittel aus den Gasanteilen mit erhöhter Feuchte den überschüssigen Feuchtegehalt durch Adsorption wegnimmt und die adsorbierte Feuchte an diejenigen Abschnitte des strömenden Gases entläßt, deren Feuchte geringer ist als der Mittelwert des Feuchtegehaltes des zugeführten Gases.

2. Verfahren nach Anspruch 1, wobei das Gas mit einer konstanten Temperatur von 20°C bis 120°C durch das Mittel geleitet wird.

3. Vorrichtung zum Ausgleich von Feuchtigkeitsschwankungen mit einer Quelle strömenden Gases, insbesondere Luft, welches einen schwankenden Feuchtegehalt aufweist, sowie mit einem Gasverbraucher der mit der Quelle verbunden ist, wobei in der Verbindung (30, 34, 5, 30a, 5a) von Quelle (10, 10a) zum Verbraucher (1) eine mit einem regenerierbarem, feuchte adsorbierendem Mittel gefüllte Kammer (32, 32a) eingeschaltet ist, die gemäß Anspruch 1 ausgelegt ist.

4. Vorrichtung nach Anspruch 3, wobei um die Kammer (32, 32a) eine Bypass-Leitung (50) geführt ist.

## Claims

1. Method of designing an apparatus for compensating for moisture variations of a gas which flows from a source and has a substantially periodically varying moisture content, and a gas consumer is provided which is connected to the source, wherein the gas is guided, at the junction between the source and consumer, through a chamber (32) which contains moisture-adsorbing agent, and the adsorption capacity of which is greater than the mean moisture content of the gas, wherein 10- to 20-times the quantity of regeneratable moisture-adsorbing agent is used relative to this moisture content of the gas per m³ hourly throughput of gas in the chamber (32), and the agent removes, by adsorption, the excess moisture content from the gas proportions with a high level of moisture and releases the adsorbed moisture to those portions of the flowing gas which have a moisture less than the mean value of the moisture content of the supplied gas.

2. Method according to claim 1, wherein the gas is conducted through the agent at a constant temperature of 20° C to 120° C.

3. Apparatus for compensating for moisture variations, said apparatus having a source of flowing gas, more especially air, which has a varying moisture content, as well as having a gas consumer which is connected to the source, a chamber (32, 32a) being introduced at the junction (30, 34, 5, 30a, 5a) between the source (10, 10a) and the consumer (1), which chamber is filled with a regeneratable, moisture-adsorbing agent and is designed according to claim 1.

4. Apparatus according to claim 3, wherein a bypass duct (50) extends around the chamber (32, 32a).

## Revendications

1. Procédé pour concevoir un dispositif destiné à compenser des fluctuations de l'humidité d'un gaz, émis par une source, présentant une teneur en eau qui varie périodiquement et destiné à un utilisateur qui est relié à la source,
**caractérisé en ce que**
- le gaz, dans la liaison entre la source et l'utilisateur, traverse une chambre (32) contenant un moyen absorbant l'humidité, dont la capacité d'absorption est supérieure à la teneur moyenne en eau du gaz,
- par rapport à cette teneur en eau du gaz par m³ de débit horaire de gaz, on introduit dans la chambre (32), une quantité 10 à 20 fois supérieure du moyen régénérable absorbant l'humidité,
- le moyen retire des fractions de gaz à teneur en eau élevée, l'excès de cette teneur et cède cette humidité absorbée aux fractions de gaz dont la teneur en eau est inférieure à la teneur moyenne du gaz amené.

2. Procédé selon la revendication 1,
**caractérisé en ce que**
le gaz est amené sur le moyen d'absorption à une température comprise entre 20 et 120°C.

3. Dispositif pour compenser les fluctuations de l'humidité d'un gaz émis par une source, en particulier de l'air, destiné à un utilisateur relié à la source,
**caractérisé en ce que**
dans la liaison (30, 34, 5, 30a, 5a) entre la source (10, 10a) et l'utilisateur (1) est montée une chambre (32, 32a) remplie d'un moyen régénérable d'absorption de l'humidité, conçue selon la revendication 1.

4. Dispositif selon la revendication 3,
**caractérisé en ce qu'**
une conduite de by-pass (50) permet de contourner la chambre (32, 32a).
